# EUROPEAN PATENT APPLICATION

(11) **EP 4 395 409 A1**
(43) Date of publication of application: **03.07.2024**
(21) Application number: 23806746.6
(22) Date of filing: 06.05.2023
(51) Int. Cl.: H04W 28/02

(54) **CONTROL METHOD, COMMUNICATION DEVICE, AND STORAGE MEDIUM**

(30) Priority: 17.05.2022 CN 202210532039
(71) Applicant: Shenzhen Transsion Holdings Co., Ltd., Shenzhen, Guangdong 518057 (CN)
(72) Inventor: ZHU, Rongchang, Shenzhen, Guangdong 518057 (CN); HUANG, Wei, Shenzhen, Guangdong 518057 (CN); HUANG, Chiunwei, Shenzhen, Guangdong 518057 (CN)
(74) Representative: Osterhoff, Utz
(86) International application number: PCT/CN2023/092601
(87) International publication number: WO 2023/221794

(57) **Abstract**

Disclosed are a control method, a communication device, and a storage medium. The method includes: in response to meeting a first preset condition, delaying, by a terminal, access to network for a preset time according to a second time issued by a network device, or, in response to meeting a preset condition, delaying, by a terminal, access to the network according to a preset strategy. Therefore, by delaying the terminal's access to the network, the problem of random access channel (RACH) congestion in the Internet of Things (IoT)-Non Terrestrial Network (NTN) network caused by centralized access of a large number of UE is avoided, thereby avoiding the problem of RACH congestion in the IoT-NTN network and the problem of business interruption caused by RACH taking up too much time and causing insufficient time for data transmission within the uplink synchronization valid time.

## Description

### CROSS-REFERENCE TO RELATED APPLICATIONS

The present application claims priority to the Chinese patent application No. 202210532039.2, filed on May 17, 2022, and titled "CONTROL METHOD, COMMUNICATION DEVICE, AND STORAGE MEDIUM", the entire contents of which are incorporated herein by reference in their entireties.

### TECHNICAL FIELD

The present application relates to the technical field of communications, and in particular, to a control method, a communication device, and a storage medium.

### BACKGROUND

In some implementations, during the random access channel (RACH) procedure of the user equipment (UE), when the network is congested, the network send the random access response(RAR) with a Backoff Indicator to instructs the UE to select a time between 0 and BackoffParameterValue to delay RACH to alleviate the congestion.

According to the conclusions of the radio access network (RAN)2 116-e meeting, for the Internet of Things (IoT)-Non Terrestrial Network (NTN) Quasi-Earth Fixed satellites scenario, due to the satellite movement, the satellites covering a certain area will stop service when arrive at a specific time point T1 (that is, end-time of serving satellite's coverage), and the service start-time of the next satellite covering the area is T2 (that is, start-time of incoming satellite's coverage). T1 and T2 are broadcast through system information (SI), and are valid for all UEs in the area. Therefore, there may be a large number of UEs attempting to access the satellite at the T2 time point, causing RACH congestion.

During the process of conceiving and implementing the present application, the inventor discovered that for the NTN network, congestion may be more severe due to larger coverage and more UEs being served. Therefore, the UE may need to try to send Random Access multiple times during the RACH process to successfully access the network (that is, the Backoff Indicator is sent multiple times by the network device to alleviate congestion). Since the uplink synchronization timer (Validity timer) is always running, and due to the large propagation delay in the NTN, the remaining valid time after the UE successfully accesses the network may not be able to meet the time required by data transmission. After the timer expired, the UE needs to re-obtain the required SI, causing service interruption.

That is, for the IoT-NTN network, the existing mechanism cannot guarantee that when the RACH is congested, the UE can successfully access the network within a limited time (Validity timer) and reserve more time for data transmission.

The foregoing description is provided to provide general background information and does not necessarily constitute prior art.

### SUMMARY

In view of the above technical problems, the present application provides a control method, a communication device and a readable storage medium. One of the objectives is to solve the problem of random access channel (RACH) congestion in the Internet of Things (IoT)-Non Terrestrial Network (NTN) network and avoid the problem of service interruption caused by RACH occupying too much time and causing insufficient time for data transmission within the uplink synchronization valid time.

The present application provides a control method, which is applicable to a communication device (such as a mobile phone), including the following steps:
S10: in response to meeting a first preset condition, delaying, by a terminal, access to network for a preset time according to a second time issued by a network device.

In an embodiment, the meeting the first preset condition includes at least one of the following:
being released by the network before a first time, the first time is issued by the network device; and
accessing the network at the second time.

In an embodiment, the method includes at least one of the following:
the first time being a service end time of the network device covering a current service area;
the second time being a service start time of a next network device covering the current service area; and
the terminal being released through a radio resource control (RRC) release message of the network.

In an embodiment, parameters carried by the RRC release message include at least one of the following: a duration T, and a specific cause value.

In an embodiment, S10 includes:
determining the preset time.

In an embodiment, manner for determining the preset time includes at least one of the following:
determining or generating the preset time according to a first time range; and
determining or generating the preset time according to a grouping.

In an embodiment, the determining or generating the preset time according to the first time range includes:
randomly selecting a duration as the preset time according to the duration T issued by the network device in a range of 0 to T, T is a value greater than 0, or T is associated with a current load.

In an embodiment, S10 further includes:
in response to meeting a second preset condition, determining that the preset time is invalid or not take effect.

In an embodiment, the meeting the second preset condition includes at least one of the following:
the RRC release message not carrying a T value;
the T value carried by the RRC release message being 0;
a release cause value carried by the RRC release message not being the specific cause value; and
a current service being a preset high-priority service.

The present application further provides a control method, which is applicable to a communication device (such as a mobile phone), including the following steps:
S100: in response to meeting a preset condition, delaying, by a terminal, access to the network according to a preset strategy.

In an embodiment, the meeting the preset condition includes: meeting a first preset condition and/or meeting a second preset condition.

In an embodiment, the meeting the first preset condition includes at least one of the following:
the terminal being released by the network before a first time, the first time is issued by a network device; and
the terminal accessing the network at a second time, the second time is issued by the network device.

In an embodiment, the method includes at least one of the following:
the first time being a service end time of the network device covering a current service area;
the second time being a service start time of a next network device covering the current service area; and
the terminal being released through a radio resource control (RRC) release message of the network.

In an embodiment, parameters carried by the RRC release message include at least one of the following: a duration T, and a specific cause value.

In an embodiment, the meeting the second preset condition includes at least one of the following:
the RRC release message carrying a T value;
the T value carried by the RRC release message not being 0;
a release cause value carried by the RRC release message being the specific cause value; and
a current service not being a preset high-priority service.

In an embodiment, the delaying, by the terminal, access to the network according to the preset strategy, including:
delaying access to the network according to the preset time.

In an embodiment, the method further includes:
determining the preset time.

In an embodiment, a manner for determining the preset time includes at least one of the following:
determining or generating the preset time according to a first time range; and
determining or generating the preset time according to a grouping.

In an embodiment, the determining or generating the preset time according to the first time range includes:
randomly selecting a duration as the preset time according to the duration T issued by the network device in a range of 0 to T, T is a value greater than 0, or T is associated with a current load.

The present application further provides a control method, which is applicable to a communication device (such as a satellite, a base station, or network devices such as aviation device), including the following steps:
S101: issuing, by a network device, a second time for a terminal to delay accessing a network in a preset time according to the second time.

In an embodiment, the method further includes:
issuing, by the network device, a radio resource control (RRC) release message to release the terminal before a first time.

In an embodiment, parameters carried by the RRC release message include at least one of the following: a duration T, and a specific cause value.

In an embodiment, the method includes at least one of the following:
issuing, by the network device, the first time and/or the second time through a system information;
the first time being a service end time of the network device covering a current service area; and
the second time being a service start time of a next network device covering the current service area.

In an embodiment, a manner for the terminal to determine the preset time includes at least one of the following:
determining or generating, by the terminal, the preset time according to a first time range; and
determining or generating, by the terminal, the preset time according to a grouping.

In an embodiment, the determining or generating, by the terminal, the preset time according to the first time range includes:
randomly selecting, by the terminal, a duration as the preset time according to the duration T issued by the network device in a range of 0 to T, T is a value greater than 0, or T is associated with a current load.

The present application further provides a control method, which is applicable to a communication device (such as a satellite, a base station, or network devices such as aviation device), including the following steps:
S1001: issuing, by a network device, a message for a terminal to delay accessing a network according to the message and a preset strategy.

In an embodiment, S1001 includes:
issuing, by a network device, a second time for a terminal to delay accessing a network in a preset time according to the second time.

In an embodiment, S1001 further includes:
issuing, by the network device, a radio resource control (RRC) release message to release the terminal before a first time.

In an embodiment, parameters carried by the RRC release message include at least one of the following: a duration T, and a specific cause value.

In an embodiment, the method includes at least one of the following:
issuing, by the network device, the first time and/or the second time through a system information;
the first time being a service end time of the network device covering a current service area; and
the second time being a service start time of a next network device covering the current service area.

In an embodiment, a manner for the terminal to determine the preset time includes at least one of the following:
determining or generating, by the terminal, the preset time according to a first time range; and
determining or generating, by the terminal, the preset time according to a grouping.

In an embodiment, the determining or generating, by the terminal, the preset time according to the first time range includes:
randomly selecting, by the terminal, a duration as the preset time according to the duration T issued by the network device in a range of 0 to T, T is a value greater than 0, or T is associated with a current load.

The present application further provides a control device, including a first access module.

The first access module is configured to delay access to the network for a preset time according to a second time issued by the network device in response to meeting the first preset condition.

The present application further provides a control device, including a second access module.

The second access module is configured to delay access to the network according to the preset strategy in response to meeting the preset conditions.

The present application further provides a control device, including a first sending module.

The first sending module is configured to issue a second time for the terminal to delay access to the network for the preset time according to the second time.

The present application further provides a control device, including a second sending module.

The second sending module is configured to issue a message for the terminal to delay access to the network according to the message and the preset strategy.

The present application further provides a communication device, including a memory, and a processor. A control program is stored on the memory, and when the control program is executed by the processor, steps according to any one of the above control methods are implemented.

The present application further provides a computer-readable storage medium. A control program is stored in the readable storage medium, and when the computer program is executed by the processor, steps according to any one of the above control methods are implemented.

The control method provided in the present application includes: in response to meeting a first preset condition, delaying, by a terminal, access to network for a preset time according to a second time issued by a network device, or, in response to meeting a preset condition, delaying, by a terminal, access to the network according to a preset strategy. Therefore, by delaying the terminal's access to the network, the problem of RACH congestion in the IoT-NTN network caused by centralized access of a large number of UE is avoided, thereby avoiding the problem of RACH congestion in the IoT-NTN network and the problem of service interruption caused by RACH taking up too much time and causing insufficient time for data transmission within the uplink synchronization valid time.

### BRIEF DESCRIPTION OF THE DRAWINGS

The accompanying drawings, which are incorporated in and constitute a part of this specification, illustrate embodiments consistent with the application and together with the description serve to explain the principles of the application. In order to more clearly illustrate the technical solutions of the embodiments of the present application, the following will briefly introduce the drawings that need to be used in the description of the embodiments. Apparently, those skilled in the art can also obtain other drawings based on these drawings without any creative effort.
FIG. 1 is a schematic diagram of the hardware structure of a terminal device that implements various embodiments of the present application.
FIG. 2 is an architecture diagram of a communication network system according to an embodiment of the present application.
FIG. 3 is a schematic flowchart of a control method according to a first embodiment of the present application.
FIG. 4 is a schematic diagram of a terminal delayed access scenario according to an embodiment of the present application.
FIG. 5 is a schematic interactive flowchart of the control method according to an embodiment of the present application.
FIG. 6 is a schematic flowchart of the control method according to a second embodiment of the present application.
FIG. 7 is a schematic flowchart of the control method according to a third embodiment of the present application.
FIG. 8 is a schematic flowchart of the control method according to a fourth embodiment of the present application.
FIG. 9 is a schematic diagram of a functional module of a control device according to an embodiment of the present application.
FIG. 10 is a schematic diagram of another functional module of the control device according to an embodiment of the present application.
FIG. 11 is a schematic diagram of the other functional module of the control device according to an embodiment of the present application.
FIG. 12 is a schematic diagram of the other functional module of the control device according to an embodiment of the present application.

The realization, functional features and advantages of the present application will be further described in conjunction with the embodiments and with reference to the accompanying drawings. By means of the above drawings, specific embodiments of the present application have been shown, which will be described in more detail hereinafter. These drawings and text descriptions are not intended to limit the scope of the concept of the application in any way, but to illustrate the concept of the application for those skilled in the art by referring to specific embodiments.

### DETAILED DESCRIPTION OF THE EMBODIMENTS

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the present application. Rather, they are merely examples of devices and methods consistent with aspects of the present application as recited in the appended claims.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a.." does not exclude the existence of other identical elements in the process, method, article or system that includes the element. In addition, components, features, and elements with the same name in different embodiments of the present application may have the same or different meanings. Its specific meaning needs to be determined according to its explanation in the specific embodiment or further combined with the context in the specific embodiment.

It should be understood that although the terms first, second, third, etc. may be used herein to describe various information, the information should not be limited to these terms. These terms are only used to distinguish information of the same type from one another. For example, without departing from the scope of this document, first information may also be called second information, and similarly, second information may also be called first information. Depending on the context, the word "if" as used herein may be interpreted as "at" or "when" or "in response to a determination". Furthermore, as used herein, the singular forms "a", "an" and "the" are intended to include the plural forms as well, unless the context indicates otherwise. It should be further understood that the terms "comprising", "including" indicate the existence of features, steps, operations, elements, components, items, species, and/or groups, but does not exclude the existence, occurrence or addition of one or more other features, steps, operations, elements, components, items, species, and/or groups. The terms "or", "and/or", "comprising at least one of" and the like used in the present application may be interpreted as inclusive, or mean any one or any combination. For example, "comprising at least one of: A, B, C" means "any of: A; B; C; A and B; A and C; B and C; A and B and C". As another example, "A, B, or C" or "A, B, and/or C" means "any of the following: A; B; C; A and B; A and C; B and C; A and B and C". Exceptions to this definition will only arise when combinations of elements, functions, steps or operations are inherently mutually exclusive in some way.

It should be understood that although the various steps in the flowchart in the embodiment of the present application are displayed sequentially as indicated by the arrows, these steps are not necessarily executed sequentially in the order indicated by the arrows. Unless otherwise specified herein, there is no strict order restriction on the execution of these steps, and they can be executed in other orders. Moreover, at least some of the steps in the figure may include multiple sub-steps or multiple stages, these sub-steps or stages are not necessarily executed at the same time, but can be executed at different times. The execution sequence thereof is not necessarily performed sequentially, but may be performed alternately or alternately with at least a part of other steps or sub-steps or stages of other steps.

Depending on the context, the words "if' as used herein may be interpreted as "at" or "when" or "in response to determining" or "in response to detecting". Similarly, depending on the context, the phrases "if determined" or "if detected (the stated condition or event)" could be interpreted as "when determined" or "in response to the determination" or "when detected (the stated condition or event)" or "in response to detection (the stated condition or event)".

It should be noted that in this article, step codes such as S10 and S20 are used for the purpose of expressing the corresponding content more clearly and concisely, and do not constitute a substantive limitation on the order. Those skilled in the art may perform S20 first and then S10 etc. during specific implementation, but these should all be within the protection scope of the present application.

It should be understood that the specific embodiments described here are only used to explain the present application, and are not intended to limit the present application.

In the following description, the use of suffixes such as "module", "part" or "unit" for denoting elements is only for facilitating the description of the present application and has no specific meaning by itself. Therefore, "module", "part" or "unit" may be used in combination.

In the present application, the communication device can be a terminal device, and can also be a satellite, a base station, or network devices such as aviation device, which should be determined according to the specific context. If the communication device is a terminal device, and then the terminal device can be implemented in various forms. For example, the terminal device described in the present application can include a mobile phone, a tablet computer, a notepad computer, a hand-held computer, a personal digital assistants (PDA), a portable media player (PMP), a navigation apparatus, a wearable device, a smart bracelet, a pedometer and other terminal devices, as well as a fixed terminal such as a base station, a digital TV and a desktop computer. If the communication device is a network device, and then the network device can be a base station or satellite or aviation device, such as low-orbit communication satellites, high-altitude platforms, and UAV (unmanned aerial vehicle). In the embodiment of the present application, the apparatus used to realize the function of the network device may be the network device itself, or it may be an apparatus that can support the network device to realize the function, such as a chip system or a combined device or component that can realize the function of the network device. The apparatus can be installed on network device. The embodiments of the present application do not limit the specific technology and specific device form used by the network device.

The present application takes a terminal device as an example to illustrate. Those skilled in the art will understand that, in addition to elements specifically used for mobile purposes, the configuration according to the embodiments of the present application can also be applied to the fixed terminal.

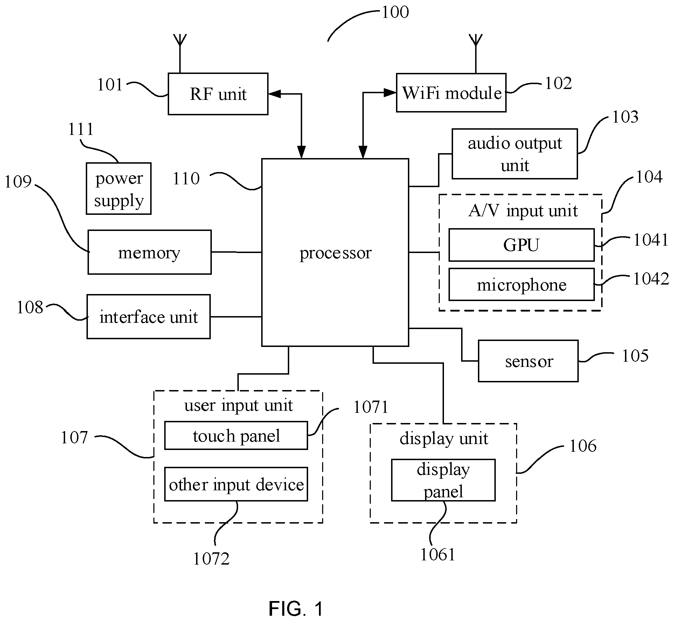

As shown in FIG. 1, FIG. 1 is a schematic diagram of a hardware structure of a terminal device according to embodiments of the present application. The terminal device 100 can include a Radio Frequency (RF) unit 101, a Wi-Fi module 102, an audio output unit 103, an audio/video (A/V) input unit 104, a sensor 105, a display unit 106, a user input unit 107, an interface unit 108, a memory 109, a processor 110, a power supply 111 and other components. Those skilled in the art can understand that the structure of the terminal device shown in FIG. 1 does not constitute a limitation on the terminal device. The terminal device can include more or fewer components, or a combination of some components, or differently arranged components than shown in the figure.

Hereinafter, each component of the terminal device will be specifically introduced with reference to FIG. 1.

The radio frequency unit 101 can be used for transmitting and receiving signals during the process of transceiving information or talking. Specifically, after receiving the downlink information of the base station, the downlink information is processed by the processor 110; in addition, the uplink data is sent to the base station. Generally, the radio frequency unit 101 includes, but is not limited to, an antenna, at least one amplifier, a transceiver, a coupler, a low noise amplifier, a duplexer, and the like. In addition, the radio frequency unit 101 can also communicate with the network and other devices through wireless communication. The above-mentioned wireless communication can use any communication standard or protocol, including but not limited to Global System of Mobile communication (GSM), General Packet Radio Service (GPRS), Code Division Multiple Access 2000 (CDMA2000), Wideband Code Division Multiple Access (WCDMA), Time Division-Synchronous Code Division Multiple Access (TD-SCDMA), Frequency Division Duplexing-Long Term Evolution (FDD-LTE), Time Division Duplexing-Long Term Evolution (TDD-LTE) and 5G, etc.

Wi-Fi is a short-range wireless transmission technology. The terminal device 100 can help users transmit and receive email, browse webpage, and access streaming media through the Wi-Fi module 102, and Wi-Fi provides users with wireless broadband Internet access. Although FIG. 1 shows the Wi-Fi module 102, it is understandable that it is not a necessary component of the terminal device and can be omitted as needed without changing the essence of the present application.

When the terminal device 100 is in a call signal receiving mode, a call mode, a recording mode, a voice recognition mode, a broadcast receiving mode, or the like, the audio output unit 103 can convert the audio data received by the radio frequency unit 101 or the Wi-Fi module 102 or stored in the memory 109 into an audio signal and output the audio signal as sound. Moreover, the audio output unit 103 can further provide audio output related to a specific function performed by the terminal device 100 (for example, call signal reception sound, message reception sound, or the like). The audio output unit 103 can include a speaker, a buzzer, or the like.

The A/V input unit 104 is configured to receive audio or video signals. The A/V input unit 104 can include a graphics processing unit (GPU) 1041 and a microphone 1042. The graphics processing unit 1041 processes image data of still pictures or videos obtained by an image capture device (such as a camera) in a video capture mode or an image capture mode. The processed image frame can be displayed on the display unit 106. The image frame processed by the graphics processing unit 1041 can be stored in the memory 109 (or other storage medium) or sent via the radio frequency unit 101 or the Wi-Fi module 102. The microphone 1042 can receive sound (audio data) in operation modes such as a call mode, a recording mode, a voice recognition mode, and the like, and can process such sound into audio data. The processed audio (voice) data can be converted into a format that can be sent to a mobile communication base station via the radio frequency unit 101 in the case of a call mode for output. The microphone 1042 can implement various types of noise cancellation (or suppression) algorithms to eliminate (or suppress) noise or interference generated during the process of transceiving audio signals.

The terminal device 100 also includes at least one sensor 105, such as a light sensor, a motion sensor, and other sensors. Specifically, the light sensor includes an ambient light sensor and a proximity sensor. The ambient light sensor can adjust the brightness of the display panel 1061 according to the brightness of the ambient light. The proximity sensor can turn off the display panel 1061 and/or the backlight when the terminal device 100 is moved to the ear. A gravity acceleration sensor, as a kind of motion sensor, can detect the magnitude of acceleration in various directions (usually three axes). The gravity acceleration sensor can detect the magnitude and direction of gravity when it is stationary, and can identify the gesture of the terminal device (such as horizontal and vertical screen switching, related games, magnetometer attitude calibration), vibration recognition related functions (such as pedometer, light press), or the like. The terminal device can also be equipped with other sensors such as a fingerprint sensor, a pressure sensor, an iris sensor, a molecular sensor, a gyroscope, a barometer, a hygrometer, a thermometer, an infrared sensor and other sensors, which will not be repeated here.

The display unit 106 is configured to display information input by the user or information provided to the user. The display unit 106 can include a display panel 1061, and the display panel 1061 can be configured in the form of a liquid crystal display (LCD), an organic light emitting diode (OLED), or the like.

The user input unit 107 can be configured to receive inputted numeric or character information, and generate key signal input related to user settings and function control of the terminal device. Specifically, the user input unit 107 can include a touch panel 1071 and other input devices 1072. The touch panel 1071, also called a touch screen, can collect user touch operations on or near it (for example, the user uses fingers, stylus and other suitable objects or accessories to operate on the touch panel 1071 or near the touch panel 1071), and drive the corresponding connection device according to a preset program. The touch panel 1071 can include two parts: a touch detection device and a touch controller. The touch detection device detects the user's touch position, detects the signal brought by the touch operation, and transmits the signal to the touch controller. The touch controller receives the touch information from the touch detection device, converts the touch information into contact coordinates, and sends it to the processor 110, and can receive and execute the instructions sent by the processor 110. In addition, the touch panel 1071 can be implemented in multiple types such as resistive, capacitive, infrared, and surface acoustic wave. In addition to the touch panel 1071, the user input unit 107 can also include other input devices 1072. Specifically, the other input devices 1072 can include, but are not limited to, one or more of physical keyboard, function keys (such as volume control buttons, switch buttons, etc.), trackball, mouse, joystick, etc., which are not specifically limited here.

Further, the touch panel 1071 can cover the display panel 1061. After the touch panel 1071 detects a touch operation on or near it, the touch operation is transmitted to the processor 110 to determine the type of the touch event, and then the processor 110 provides a corresponding visual output on the display panel 1061 according to the type of the touch event. Although in FIG. 1, the touch panel 1071 and the display panel 1061 are used as two independent components to realize the input and output functions of the terminal device, in some embodiments, the touch panel 1071 and the display panel 1061 can be integrated to implement the input and output functions of the terminal device, which is not specifically limited here.

The interface unit 108 serves as an interface through which at least one external device can be connected to the terminal device 100. For example, the external device can include a wired or wireless earphone port, an external power source (or battery charger) port, a wired or wireless data port, a memory card port, a port for connecting devices with identification modules, an audio input/output (I/O) port, a video I/O port, an earphone port, or the like. The interface unit 108 can be configured to receive input (such as data information, electricity, or the like) from an external device and transmit the received input to one or more elements in the terminal device 100 or can be configured to transfer data between the terminal device 100 and the external device.

The memory 109 can be configured to store software programs and various data. The memory 109 can mainly include a program storage area and a data storage area. The program storage area can store the operating system, at least one application required by the function (such as sound play function, image play function, etc.), or the like. The data storage area can store data (such as audio data, phone book, etc.) created based on the use of the mobile phone. In addition, the memory 109 can include a high-speed random access memory, and can also include a non-volatile memory, such as at least one magnetic disk storage device, a flash memory device, or other volatile solid-state storage devices.

The processor 110 is a control center of the terminal device, and uses various interfaces and lines to connect the various parts of the entire terminal device. By running or performing the software programs and/or modules stored in the memory 109, and calling the data stored in the memory 109, various functions and processing data of the terminal device are executed, thereby overall monitoring of the terminal device is performed. The processor 110 can include one or more processing units; and the processor 110 may integrate an application processor and a modem processor. The application processor mainly processes an operating system, a user interface, an application, or the like, and the modem processor mainly processes wireless communication. It can be understood that the foregoing modem processor may not be integrated into the processor 110.

The terminal device 100 can also include a power source 111 (such as a battery) for supplying power to various components. The power supply 111 can be logically connected to the processor 110 through a power management system, so that functions such as charging, discharging, and power consumption management can be managed through the power management system.

Although not shown in FIG. 1, the terminal device 100 can also include a Bluetooth module, or the like, which will not be repeated herein.

In order to facilitate the understanding of the embodiments of the present application, the following describes the communication network system on which the terminal device of the present application is based.

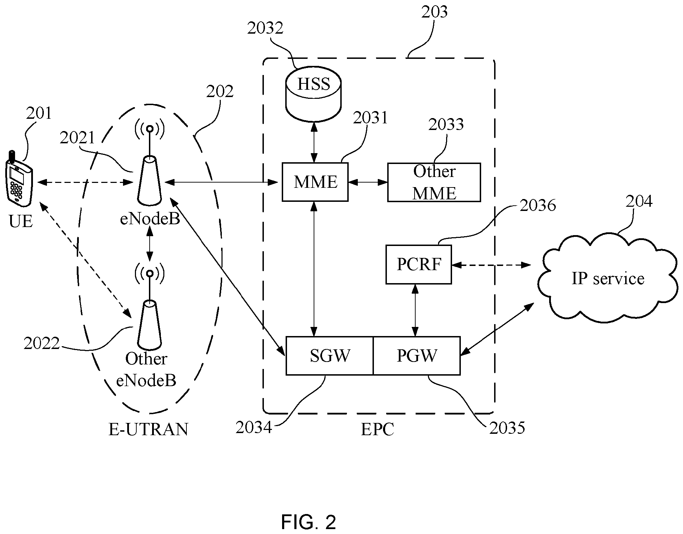

As shown in FIG. 2, FIG. 2 is an architecture diagram of a communication network system according to an embodiment of the present application. The communication network system is an LTE system of general mobile communication network technology. The LTE system includes a User Equipment (UE) 201, an Evolved UMTS Terrestrial Radio Access Network (E-UTRAN) 202, an Evolved Packet Core (EPC) 203, and an operator's IP service 204 that are sequentially connected in communication.

Specifically, the UE 201 can be the aforementioned terminal 100, which will not be repeated here.

E-UTRAN 202 includes eNodeB 2021 and other eNodeBs 2022. The eNodeB 2021 can be connected to other eNodeBs 2022 through a backhaul (for example, an X2 interface), the eNodeB 2021 is connected to the EPC 203, and the eNodeB 2021 can provide access from the UE 201 to the EPC 203.

The EPC 203 can include Mobility Management Entity (MME) 2031, Home Subscriber Server (HSS) 2032, other MMEs 2033, Serving Gate Way (SGW) 2034, PDN Gate Way (PGW) 2035, Policy and Charging Rules Function (PCRF) 2036, and so on. MME 2031 is a control node that processes signaling between UE 201 and EPC 203, and provides bearer and connection management. HSS 2032 is configured to provide some registers to manage functions such as the home location register (not shown), and save some user-specific information about service feature, data rates, and so on. All user data can be sent through SGW 2034, PGW 2035 can provide UE 201 IP address allocation and other functions. PCRF 2036 is a policy and charging control policy decision point for service data flows and IP bearer resources, which selects and provides available policy and charging control decisions for policy and charging execution functional units (not shown).

The IP service 204 can include Internet, intranet, IP Multimedia Subsystem (IMS), or other IP services.

Although the LTE system is described above as an example, those skilled in the art should know that, the present application is not only applicable to the LTE system, but also applicable to other wireless communication systems, such as GSM, CDMA2000, WCDMA, TD-SCDMA, and new network systems (for example 5G) in the future, or the like, which is not limited herein.

Technical terms involved in the embodiments of the present application include:
UE: user equipment;
RACH: random access channel;
RAR: random access response;
SI: system information;
TN: terrestrial network;
NTN: non-terrestrial network;
IoT-NTN: internet of things - non-terrestrial network;
NB-IoT: narrow band internet of things;
Quasi-earth fixed cell: An NTN cell fixed with respect to a certain geographic area on the earth during a certain time duration. This can be provided by beam(s) covering one geographic area for a finite period and a different geographic area during another period.

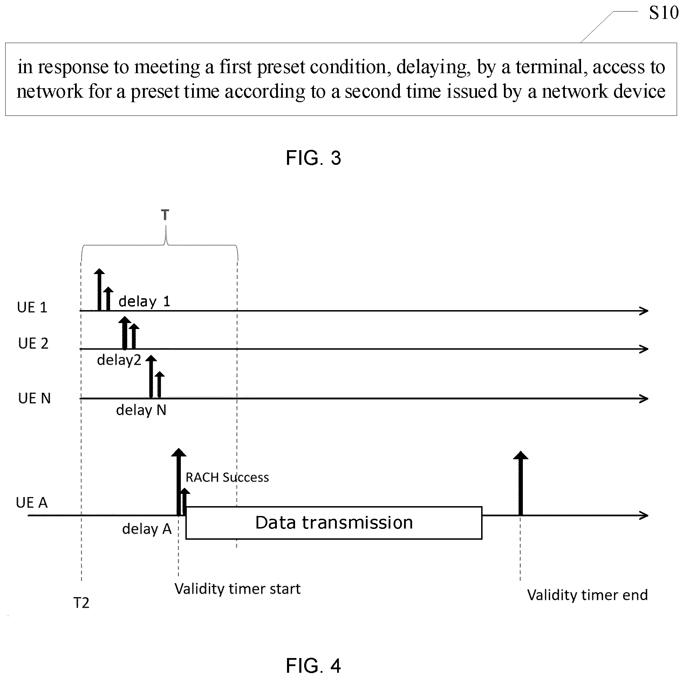

As shown in FIG. 3, FIG. 3 is a schematic flowchart of a control method according to a first embodiment of the present application. In the embodiment, the control method of the present application is applicable to the terminal device (hereinafter referred to as the terminal) as described above, such as UE. Communication connections are established between the terminal and the network devices in the network communication system where the terminal is located. The network device can be a base station or satellite or aviation device, such as low-orbit communication satellites, high-altitude platforms, and UAV. In the embodiment of the present application, the apparatus used to realize the function of the network device may be the network device itself, or it may be an apparatus that can support the network device to realize the function, such as a chip system or a combined device or component that can realize the function of the network device. The apparatus can be installed on network device. The embodiments of the present application do not limit the specific technology and specific device form used by the network device.

The embodiment takes the communication implementation solution between the satellite and the terminal (UE) as an example.

As shown in FIG. 3, the first embodiment of the present application provides a control method. The control method of the present application includes the following steps:
S10: in response to meeting a first preset condition, delaying, by a terminal, access to network for a preset time according to a second time issued by a network device.

The embodiment considers that: the existing mechanism cannot guarantee that when the RACH is congested, the UE can successfully access the network within a limited time (Validity timer) and reserve more time for data transmission. Therefore, the present application provides a solution that can avoid RACH congestion in the IoT-NTN network, thereby avoiding the problem of service interruption caused by RACH taking up too much time and causing insufficient time for data transmission within the uplink synchronization valid time.

In an embodiment, as mentioned above, according to the conclusions of the radio access network (RAN)2 116-e meeting, for the Internet of Things (IoT)-Non Terrestrial Network (NTN) Quasi-Earth Fixed satellites scenario, due to the satellite movement, the satellites covering a certain area will stop service when arrive at a specific time point T1 (that is, end-time of serving satellite's coverage), and the service start-time of the next satellite covering the area is T2 (that is, start-time of incoming satellite's coverage). T1 and T2 are broadcast through system information (SI), and are valid for all UEs in the area.

As shown in FIG. 4, FIG. 4 is a schematic diagram of a terminal delayed access scenario according to an embodiment of the present application.

As shown in FIG. 4, the current service satellite broadcasts the first time T1 (i.e. end-time of the serving satellite's coverage) and the second time T2 (i.e. start-time of the incoming satellite's coverage) through the system information.

In an embodiment, the first time T1 is the service end time when the network device covers the current service area; the second time T2 is the service start time when the next network device covers the current service area. For example, the network device is a satellite, the first time T1 is the service end time of the satellite covering the current network service area; the second time T2 is the service start time of the next satellite covering the current network service area.

T1 and T2 are broadcast through SI and are effective for all UE in the area. Therefore, at the T2 time point, there may be a large number of UE trying to access the satellite, causing RACH congestion.

In an embodiment, for the UE that attempts to access the network at time T2, delaying accessing in a preset time delay based on the time T2, that is, the UE will try to obtain the required SI and access the network at the time point of T2+delay, which ensures that the time for each UE to access the network is discretized to avoid RACH congestion, thereby avoiding the problem of service interruption caused by RACH taking up too much time and causing insufficient time for data transmission within the uplink synchronization valid time.

In an embodiment, in response to meeting a first preset condition, delaying, by a terminal, access to network for a preset time according to a second time issued by a network device.

Therefore, through the above solution, RACH congestion in the IoT-NTN network can be avoided, thereby avoiding the problem of service interruption caused by RACH taking up too much time and causing insufficient time for data transmission within the uplink synchronization valid time.

In an embodiment, meeting the first preset condition includes at least one of the following:
the terminal being released by the network before a first time; and
the terminal accessing the network at a second time.

In an embodiment, the first time T1 and the second time T2 are issued by the network to the terminal (UE) through SI (system information), and the terminal delays access to the network for the preset time according to the second time T2 issued by the network device.

In an embodiment, the terminal is released by the network before the first time, and the following solution can be used.

The RRC release message is issued by the network to the terminal, and the terminal is released through the RRC release message issued by the network device.

In an embodiment, the parameters carried by the RRC release message issued by the network device may include at least one of the following: a duration T, and a specific cause value. In an embodiment, the specific cause value such as coverage discontinuity indicates that the release is because the current satellite is about to stop service.

In an embodiment, the step S10 may include: determining the preset time by the terminal.

In response to meeting the first preset condition, the terminal determining the preset time, and delaying access to the network for the preset time according to the second time issued by the network device.

In an embodiment, the manner for the terminal to determine the preset time may include at least one of the following.

First manner: determining or generating, by the terminal, the preset time according to a first time range.

In an embodiment, the terminal can randomly select a duration as the preset time according to the duration T issued by the network device in the range of 0 to T.

In an embodiment, T is a value greater than 0. The T value cannot exceed the satellite service time.

In an embodiment, T can be a fixed value.

In an embodiment, T may be associated with the current cell load. For example, the higher the load, the greater T is.

Second manner: determining or generating, by the terminal, the preset time according to a grouping and a preset time granularity.

In an embodiment, the quantity of groups and the preset time granularity can be determined by the network according to the current load and the random access channel RACH capacity, and issued to the UE.

In an embodiment, step S10 may further includes:
in response to meeting a second preset condition, determining, by the terminal, that the preset time is invalid or not take effect.

In an embodiment, meeting the second preset condition includes at least one of the following.

In a first case, the RRC release message does not carry the T value.

In a second case, the T value carried by the RRC release message is 0.

In a third case, the release cause value carried by the RRC release message is not a specific cause value.

That is, if the RRC release does not carry a T value or the T value is 0 or the release cause is not a specific cause value such as discontinue coverage, the UE will access the network without delay.

In a fourth case, if the current service is a preset high-priority service, for example, if the current UE is a high-priority service such as an emergency call, the UE will access the network without delay.

In an embodiment, as shown in FIG. 4, the current service satellite broadcasts T1 (i.e. end-time of serving satellite's coverage) and T2 (i.e. start-time of incoming satellite's coverage) through system information.

For a UE that attempts to access the network at time T2, the accessing will be delayed by delay based on T2, that is, the UE will try to obtain the required SI and access the network at the T2+delay time point to ensure that the time of each UE accessing the network is discrete to avoid RACH congestion.

In an embodiment, the UE and the corresponding delay can be determined as follows.

### Option a:

The UE is a UE released by the network through the RRC release message, and the RRC release message carries a specific cause value, such as coverage discontinuity, indicating that the release is because the current satellite is about to stop serving.

The RRC release message carries a duration T, then delay=random (0, T), that is, each UE randomly selects a time delay access within the range of 0~T.

### Option b:

The UE is a UE released by the network through the RRC release message, and the RRC release message carries a specific cause value, such as coverage discontinuity, indicating that the release is because the current satellite is about to stop serving.

UE are divided into N groups (such as grouping according to UE identification, UEID mod N), delay delta, N and delta are issued by the network device, then the delayed access time of each group of UE is (UEID mod N) *delta.

In an embodiment, N and delta can be determined by the network according to the current load and RACH capacity. For example, delta can be the currently configured RACH cycle.

### Option c:

The UE is all UE attempting to access the network at time T2.

The network device sends an RRC release message, and the RRC release message carries a duration T, then delay=random (0, T), that is, each UE randomly selects a time delay access within the range of 0~T.

### Option d:

The UE are all UE that attempt to access the network at time T2.

UE are divided into N groups (such as grouping according to UE identification, UEID mod N), delay delta, N and delta are issued by the network device, then the delayed access time of each group of UE is (UEID mod N) *delta. N and delta can be determined by the network based on the current load and RACH capacity. For example, delta can be the currently configured RACH cycle.

In an embodiment, through the above solution, in response to meeting the first preset condition, the terminal delays access to the network for a preset time according to the second time issued by the network device. Therefore, by delaying the terminal's access to the network for a preset time, the problem of RACH congestion in the IoT-NTN network caused by centralized access of a large number of UE is avoided, thereby avoiding the problem of RACH congestion in the IoT-NTN network and the problem of service interruption caused by RACH taking up too much time and causing insufficient time for data transmission within the uplink synchronization valid time.

Assume that there is service area a, a Satellite1, and a Satellite2. The following is a detailed description of the implementation solutions for different scenarios.

### First scenario:

The Satellite1 serves area a at the current time, and broadcasts T1 and T2 through system information, and the UE receives T1 and T2.

Before the T1 time comes, since the satellite1 is about to stop serving, all connected mode UE are released through the RRC Release message. The RRC release message carries the release cause value discontinue coverage and time T.

The Satellite2 will serve area a at the T2 time point. For UE whose release cause value is discontinue coverage and attempt to access the Satellite2 at the T2 time point, access will be delayed by the delay time, delay=random (0, T). For example, assuming T=10s and there are 10 UE trying to access the Satellite2 in the current network, the time for each UE to access the network may be as shown in Table 1 below.

**Table 1**

| U.E. | Access time | U.E. | Access time |
|---|---|---|---|
| UE#0 | T2+2s | UE#5 | T2+7s |
| UE#1 | T2+5s | UE#6 | T2+4s |
| UE#2 | T2+1s | UE#7 | T2+6s |
| UE#3 | T2+9s | UE#8 | T2+3s |
| UE#4 | T2+0s | UE#9 | T2+8s |

In an embodiment, the T value can be fixed or associated with the current cell load. The higher the load, the greater the T value. The T value cannot exceed the satellite service time.

In an embodiment, if the RRC release does not carry the T value or the T value is 0 or the release cause is not discontinue coverage, the UE will not take effect the delay.

In an embodiment, if the current UE is in high-priority service such as emergency calls, the UE will access the network without delay.

### Second scenario:

Satellite1 serves area a at the current time and broadcastsT1 and T2 through system information, and the UE receives T1 and T2.

Before the T1 time comes, the Satellite1 releases all connected mode UE through the RRC Release message. The RRC release message carries the release cause value discontinue coverage.

The Satellite2 will serve area a at time point T2. For UE whose release cause value is discontinue coverage and attempt to access Satellite2 at time point T2, access will be delayed by the delay time according to the index of the group thereof.

Index = UEID mod N, and the delay time of each UE is delay=index*delta.

N is the number of groups, delta is the preset time granularity, and the UE delay time cannot exceed the satellite service time.

Assuming N=10, and there are 100 UE trying to access the Satellite2 in the current network, the time for each UE to access the network may be as shown in Table 2 below (ideally, the number of UE in each group is the same):

**Table 2**

| UEID | Access time | UEID | Access time |
|---|---|---|---|
| UE#0, UE#10, UE#20, UE#30, | T2+0*delta | UE#15, UE#25, UE#35, UE#45, UE#55, UE#65, UE#75, UE#85, UE#95 | T2+5*delta |
| UE#40, UE#50, UE#60, UE#70, | | | |
| UE#80, UE#90 | | | |
| UE#11, UE#21, UE#31, UE#41, | T2+1 *delta | UE#16, UE#26, UE#36, UE#46, UE#56, UE#66, UE#76, UE#86, UE#96 | T2+6*delta |
| UE#51, UE#61, UE#71, UE#81, | | | |
| UE#91 | | | |
| UE#12, UE#22, UE#32, UE#42, | T2+2*delta | UE#17, UE#27, UE#37, UE#47, UE#57, UE#67, UE#75, UE#85, UE#95 | T2+7*delta |
| UE#52, UE#62, UE#72, UE#82, | | | |
| UE#92 | | | |
| UE#13, UE#23, UE#33, UE#43, | T2+3*delta | UE#18, UE#28, UE#38, UE#48, UE#58, UE#68, UE#78, UE#88, UE#98 | T2+8*delta |
| UE#53, UE#63, UE#73, UE#83, | | | |
| UE#93 | | | |
| UE#14, UE#24, UE#34, UE#44, | T2+4*delta | UE#19, UE#29, UE#39, UE#49, UE#59, UE#69, UE#79, UE#89, UE#99 | T2+9*delta |
| UE#54, UE#64, UE#74, UE#84, UE#94 | | | |

In an embodiment, if the current UE is in high-priority service such as emergency calls, delay will not take effect.

### Third scenario:

The Satellite1 serves area a at the current time and broadcasts T1, T2 and T through system information, and the UE receives T1, T2, T.

The Satellite2 will serve area a at time point T2. For all UE that attempt to access the Satellite2 at time point T2, access will be delayed by the delay time, delay=random (0, T).

For example, assuming T = 10s and there are 10 UE attempting to access the Satellite2 in the current network, the time for each UE to access the network may be as shown in Table 3 below.

**Table 3**

| UE | Access time | UE | Access time |
|---|---|---|---|
| UE#0 | T2+2s | UE#5 | T2+7s |
| UE#1 | T2+5s | UE#6 | T2+4s |
| UE#2 | T2+1s | UE#7 | T2+6s |
| UE#3 | T2+9s | UE#8 | T2+3s |
| UE#4 | T2+0s | UE#9 | T2+8s |

In an embodiment, if the current UE is in high-priority service such as emergency calls, delay will not take effect.

### Fourth scenario:

The Satellite1 serves area a at the current time and broadcasts T1 and T2 through system information, and the UE receives T1 and T2.

The Satellite2 will serve area a at time point T2. For all UE attempting to access the Satellite2 at time point T2, access will be delayed by the delay time according to the index of the group thereof.

Index = UEID mod N, the delay time of each UE is delay=index*delta,
N is the number of groups, delta is the preset time granularity, and the UE delay time cannot exceed the satellite service time.

Assuming N=10 and there are 100 UE trying to access the Satellite2 in the current network, the time for each UE to access the network may be as shown in Table 4 below (ideally, the number of UE in each group is the same).

**Table 4**

| UEID | Access time | UEID | Access time |
|---|---|---|---|
| UE#0, UE#10, UE#20, UE#30, | T2+0*delta | UE#15, UE#25, UE#35, UE#45, UE#55, UE#65, UE#75, UE#85, UE#95 | T2+5*delta |
| UE#40, UE#50, UE#60, UE#70, | | | |
| UE#80, UE#90 | | | |
| UE#11, UE#21, UE#31, UE#41, | T2+1*delta | UE#16, UE#26, UE#36, UE#46, UE#56, UE#66, UE#76, UE#86, UE#96 | T2+6*delta |
| UE#51, UE#61, UE#71, UE#81, | | | |
| UE#91 | | | |
| UE#12, UE#22, UE#32, UE#42, | T2+2*delta | UE#17, UE#27, UE#37, UE#47, UE#57, UE#67, UE#75, UE#85, UE#95 | T2+7*delta |
| UE#52, UE#62, UE#72, UE#82, | | | |
| UE#92 | | | |
| UE#13, UE#23, UE#33, UE#43, | T2+3*delta | UE#18, UE#28, UE#38, UE#48, UE#58, UE#68, UE#78, UE#88, UE#98 | T2+8*delta |
| UE#53, UE#63, UE#73, UE#83, | | | |
| UE#93 | | | |
| UE#14, UE#24, UE#34, UE#44, | T2+4*delta | UE#19, UE#29, UE#39, UE#49, UE#59, UE#69, UE#79, UE#89, UE#99 | T2+9*delta |
| UE#54, UE#64, UE#74, UE#84, | | | |
| UE#94 | | | |

In an embodiment, if the current UE is in high-priority service such as emergency calls, the delay will not take effect.

In an embodiment, through the above solution, in response to meeting the first preset condition, the terminal delays access to the network for a preset time according to the second time issued by the network device. Therefore, by delaying the terminal's access to the network for a preset time, the problem of RACH congestion in the IoT-NTN network caused by centralized access of a large number of UE is avoided, thereby avoiding the problem of RACH congestion in the IoT-NTN network and the problem of service interruption caused by RACH taking up too much time and causing insufficient time for data transmission within the uplink synchronization valid time.

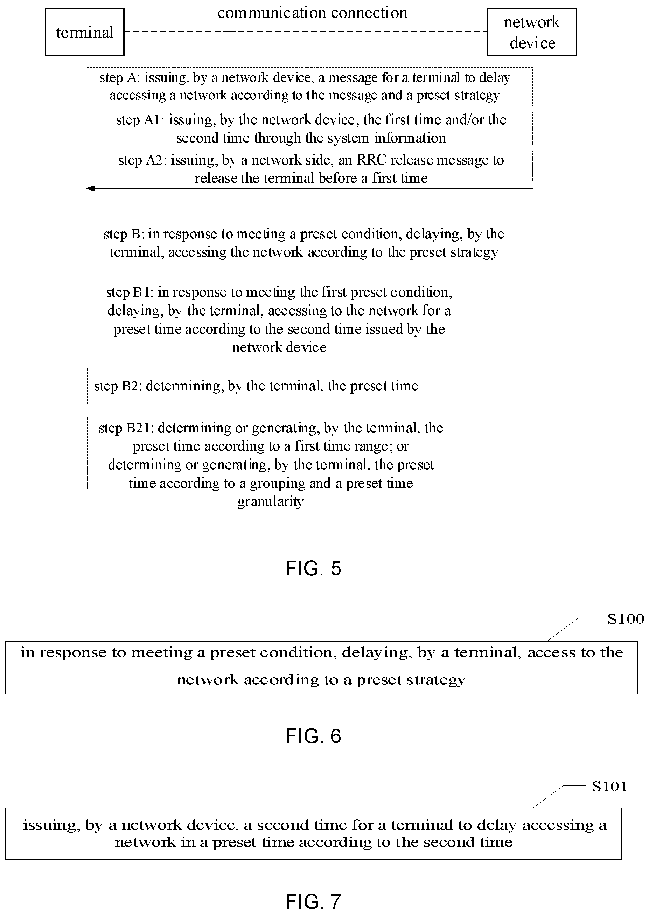

In an embodiment, the process of implementing congestion control for the communication between the network device and the terminal (UE) can be referred to as shown in FIG. 5.

As shown in FIG. 5, the main interaction processes include:
step A, issuing, by a network device, a message for a terminal to delay accessing a network according to the message and a preset strategy;
step A1, issuing, by the network device, the first time and/or the second time through the system information;
step A2, issuing, by a network side, an RRC release message to release the terminal before a first time;
step B, in response to meeting a preset condition, delaying, by the terminal, accessing the network according to the preset strategy;
step B1, in response to meeting the first preset condition, delaying, by the terminal, accessing to the network for a preset time according to the second time issued by the network device;
step B2, determining, by the terminal, the preset time; and
step B21, determining or generating, by the terminal, the preset time according to a first time range; or determining or generating, by the terminal, the preset time according to a grouping and a preset time granularity.

For the specific interactive control process, reference can be made to the above-mentioned embodiments and will not be described again here.

In an embodiment, through the above solution, in response to meeting the first preset condition, the terminal delays access to the network for the preset time according to the second time issued by the network device, or the terminal delays access to the network according to the message issued by the network device and the preset strategy. Therefore, by delaying the terminal's access to the network for a preset time, the problem of RACH congestion in the IoT-NTN network caused by centralized access of a large number of UE is avoided, thereby avoiding the problem of RACH congestion in the IoT-NTN network and the problem of service interruption caused by RACH taking up too much time and causing insufficient time for data transmission within the uplink synchronization valid time.

As shown in FIG. 6, the second embodiment of the present application provides a control method, which is applicable to the terminal side. The control method of the present application includes the following steps.

S100: in response to meeting a preset condition, delaying, by a terminal, access to the network according to a preset strategy.

In an embodiment, communication connections are established between the terminal and the network devices in the network communication system where the terminal is located. The network device can be a base station or satellite or aviation device, such as low-orbit communication satellites, high-altitude platforms, and UAV. In the embodiment of the present application, the apparatus used to realize the function of the network device may be the network device itself, or it may be an apparatus that can support the network device to realize the function, such as a chip system or a combined device or component that can realize the function of the network device. The apparatus can be installed on network device. The embodiments of the present application do not limit the specific technology and specific device form used by the network device

The embodiment takes the communication implementation solution between the satellite and the terminal (UE) as an example.

The embodiment considers that: for the IoT-NTN network, the existing mechanism cannot guarantee that when the RACH is congested, the UE can successfully access the network within a limited time (Validity timer) and reserve more time for data transmission. Therefore, the present application provides a solution that can avoid RACH congestion in the IoT-NTN network, thereby avoiding the problem of service interruption caused by RACH taking up too much time and causing insufficient time for data transmission within the uplink synchronization valid time.

In an embodiment, as mentioned above, according to the conclusions of the radio access network (RAN)2 116-e meeting, for the Internet of Things (IoT)-Non Terrestrial Network (NTN) Quasi-Earth Fixed satellites scenario, due to the satellite movement, the satellites covering a certain area arrive will stop service when arrive at a specific time point T1 (that is, end-time of serving satellite's coverage), and the service start-time of the next satellite covering the area is T2 (that is, start-time of incoming satellite's coverage). T1 and T2 are broadcast through SI, and are valid for all UE in the area.

As shown in FIG. 4, FIG. 4 is a schematic diagram of a terminal delayed access scenario according to an embodiment of the present application.

As shown in FIG. 4, the current service satellite broadcasts the first time T1 (i.e. end-time of the serving satellite's coverage) and the second time T2 (i.e. start-time of the incoming satellite's coverage) through the system information.

In an embodiment, the first time T1 is the service end time when the network device covers the current service area; the second time T2 is the service start time when the next network device covers the current service area. For example, the network device is a satellite, the first time T1 is the service end time of the satellite covering the current network service area; the second time T2 is the service start time of the next satellite covering the current network service area.

T1 and T2 are broadcast through SI and are effective for all UE in the area. Therefore, at the T2 time point, there may be a large number of UE trying to access the satellite, causing RACH congestion.

In an embodiment, for the UE that attempts to access the network at time T2, delaying accessing in a preset time delay based on the time T2, that is, the UE will try to obtain the required SI and access the network at the time point of T2+delay, which ensures that the time for each UE to access the network is discretized to avoid RACH congestion, thereby avoiding the problem of service interruption caused by RACH taking up too much time and causing insufficient time for data transmission within the uplink synchronization valid time.

In an embodiment, in response to meeting a preset condition, delaying, by a terminal, access to the network according to a preset strategy.

In an embodiment, meeting the preset condition may include: meeting a first preset condition and/or meeting a second preset condition.

In an embodiment, the meeting the first preset condition includes at least one of the following:
the terminal being released by the network before the first time; and
the terminal accessing the network at the second time.

In an embodiment, the first time T1 and the second time T2 are issued by the network to the terminal (UE) through SI (system information), and the terminal delays access to the network for the preset time according to the second time T2 issued by the network device.

In an embodiment, the terminal is released by the network before the first time, and the following solution can be used.

The RRC release message is issued by the network to the terminal, and the terminal is released through the RRC release message issued by the network device.

In an embodiment, the parameters carried by the RRC release message issued by the network device may include at least one of the following: a duration T, and a specific cause value. In an embodiment, the specific cause value such as coverage discontinuity indicates that the release is because the current satellite is about to stop service.

In an embodiment, the meeting the second preset condition may include at least one of the following.

In a first case, the RRC release message carrying a T value;

In a second case, the T value carried by the RRC release message not being 0;

In a third case, a release cause value carried by the RRC release message being the specific cause value.

That is, if the RRC release does not carry the T value or the T value is 0 or the release cause is not a specific cause value such as discontinue coverage, the second preset condition is not met and the UE will access the network without delay.

In a fourth case, if the current service is not a preset high-priority service. For example, if the current UE is a high-priority service such as an emergency call, the second preset condition is not met, and the UE will access the network without delay.

In an embodiment, in response to meeting the first preset condition and/or meeting the second preset condition, delaying, by the terminal, access to the network according to the preset strategy.

In an embodiment, the delaying, by the terminal, access to the network according to the preset strategy, including:
delaying, by the terminal, access to the network according to the preset time.

In an embodiment, the method further includes:
determining, by the terminal, the preset time.

In an embodiment, in response to meeting the first preset condition and/or meeting the second preset condition, determining the preset time, and delaying, by the terminal, access to the network according to the second time issued by the network device.

In an embodiment, a manner for the terminal to determine the preset time includes at least one of the following.

First manner: determining or generating, by the terminal, the preset time according to a first time range.

In an embodiment, the terminal can randomly select a duration as the preset time according to the duration T issued by the network device in the range of 0 to T.

In an embodiment, T is a value greater than 0. The T value cannot exceed the satellite service time.

In an embodiment, T can be a fixed value.

In an embodiment, T may be associated with the current cell load. For example, the higher the load, the greater T is.

Second manner: determining or generating, by the terminal, the preset time according to a grouping and a preset time granularity.

In an embodiment, the quantity of groups and the preset time granularity can be determined by the network according to the current load and the random access channel RACH capacity, and issued to the UE.

In an embodiment, as shown in FIG. 4, the current service satellite broadcasts T1 (i.e. end-time of serving satellite's coverage) and T2 (i.e. start-time of incoming satellite's coverage) through system information.

For a UE that attempts to access the network at time T2, the accessing will be delayed by delay based on T2, that is, the UE will try to obtain the required SI and access the network at the T2+delay time point to ensure that the time of each UE accessing the network is discrete to avoid RACH congestion.

In an embodiment, the UE and the corresponding delay can be determined as follows:

### Option a:

The UE is a UE released by the network through the RRC release message, and the RRC release message carries a specific cause value, such as coverage discontinuity, indicating that the release is because the current satellite is about to stop serving.

The RRC release message carries a duration T, then delay=random (0, T), that is, each UE randomly selects a time delay access within the range of 0~T.

### Option b:

The UE is a UE released by the network through the RRC release message, and the RRC release message carries a specific cause value, such as coverage discontinuity, indicating that the release is because the current satellite is about to stop serving.

UEs are divided into N groups (such as grouping according to UE identification, UEID mod N), delay delta, N and delta are issued by the network device, then the delayed access time of each group of UE is (UEID mod N) *delta.

In an embodiment, N and delta can be determined by the network according to the current load and RACH capacity. For example, delta can be the currently configured RACH cycle.

### Option c:

The UE is all UE attempting to access the network at time T2.

The network device sends an RRC release message, and the RRC release message carries a duration T, then delay=random (0, T), that is, each UE randomly selects a time delay access within the range of 0~T.

### Option d:

The UE are all UE that attempt to access the network at time T2.

UE are divided into N groups (such as grouping according to UE identification, UEID mod N), delay delta, N and delta are issued by the network device, then the delayed access time of each group of UE is (UEID mod N) *delta. N and delta can be determined by the network based on the current load and RACH capacity. For example, delta can be the currently configured RACH cycle.

In an embodiment, through the above solution, in response to meeting the preset condition, the terminal delays access to the network according to the preset strategy. Therefore, by delaying the terminal's access to the network for a preset time, the problem of RACH congestion in the IoT-NTN network caused by centralized access of a large number of UE is avoided, thereby avoiding the problem of RACH congestion in the IoT-NTN network and the problem of service interruption caused by RACH taking up too much time and causing insufficient time for data transmission within the uplink synchronization valid time.

Assume that there is service area a, a Satellite1, and a Satellite2. The following is a detailed description of the implementation solutions for different scenarios.

### First scenario:

The Satellite1 serves area a at the current time, and broadcasts T1 and T2 through system information, and the UE receives T1 and T2.

Before the T1 time comes, since the satellite1 is about to stop serving, all connected mode UE are released through the RRC Release message. The RRC release message carries the release cause value discontinue coverage and time T.

The Satellite2 will serve area a at the T2 time point. For UE whose release cause value is discontinue coverage and attempt to access the Satellite2 at the T2 time point, access will be delayed by the delay time, delay=random (0, T). For example, assuming T=10s and there are 10 UE trying to access the Satellite2 in the current network, the time for each UE to access the network may be as shown in Table 1 above.

In an embodiment, the T value can be fixed or associated with the current cell load. The higher the load, the greater the T value. The T value cannot exceed the satellite service time.

In an embodiment, if the RRC release does not carry the T value or the T value is 0 or the release cause is not discontinue coverage, the UE will access the network without delay.

In an embodiment, if the current UE is in high-priority service such as emergency calls, the UE will access the network without delay.

### Second scenario:

Satellite1 serves area a at the current time and broadcastsT1 and T2 through system information, and the UE receives T1 and T2.

Before the T1 time comes, the Satellite1 releases all connected mode UE through the RRC Release message. The RRC release message carries the release cause value discontinue coverage.

The Satellite2 will serve area a at time point T2. For UE whose release cause value is discontinue coverage and attempt to access Satellite2 at time point T2, access will be delayed by the delay time according to the index of the group thereof.

Index = UEID mod N, and the delay time of each UE is delay=index*delta.
N is the number of groups, delta is the preset time granularity, and the UE delay time cannot exceed the satellite service time.

Assuming N=10, and there are 100 UE trying to access the Satellite2 in the current network, the time for each UE to access the network may be as shown in Table 2 above (ideally, the number of UE in each group is the same).

In an embodiment, if the current UE is in high-priority service such as emergency calls, delay will not take effect.

### Third scenario:

The Satellite1 serves area a at the current time and broadcasts T1, T2 and T through system information, and the UE receives T1, T2, T.

The Satellite2 will serve area a at time point T2. For all UE that attempt to access the Satellite2 at time point T2, access will be delayed by the delay time, delay=random (0, T).

For example, assuming T = 10s and there are 10 UE attempting to access the Satellite2 in the current network, the time for each UE to access the network may be as shown in Table 3 above.

In an embodiment, if the current UE is in high-priority service such as emergency calls, delay will not take effect.

### Fourth scenario:

The Satellite1 serves area a at the current time and broadcasts T1 and T2 through system information, and the UE receives T1 and T2.

The Satellite2 will serve area a at time point T2. For all UE attempting to access the Satellite2 at time point T2, access will be delayed by the delay time according to the index of the group thereof.

Index = UEID mod N, the delay time of each UE is delay=index*delta,
N is the number of groups, delta is the preset time granularity, and the UE delay time cannot exceed the satellite service time.

Assuming N=10 and there are 100 UE trying to access the Satellite2 in the current network, the time for each UE to access the network may be as shown in Table 4 above (ideally, the number of UE in each group is the same).

In an embodiment, if the current UE is in high-priority service such as emergency calls, the delay will not take effect.

In an embodiment, through the above solution, in response to meeting the first preset condition, the terminal delays access to the network for a preset time according to the second time issued by the network device. Therefore, by delaying the terminal's access to the network for a preset time, the problem of RACH congestion in the IoT-NTN network caused by centralized access of a large number of UE is avoided, thereby avoiding the problem of RACH congestion in the IoT-NTN network and the problem of service interruption caused by RACH taking up too much time and causing insufficient time for data transmission within the uplink synchronization valid time.

In an embodiment, the process of implementing congestion control for communication between the network device and the terminal (UE) can be referred to as shown in FIG. 5 and will not be described again here.

As shown in FIG. 7, the third embodiment of the present application provides a control method, which is applicable to network device. The control method includes the following steps.

S101: issuing, by a network device, a second time for a terminal to delay accessing a network in a preset time according to the second time.

In an embodiment, communication connections are established between the terminal and the network devices in the network communication system where the terminal is located. The network device can be a base station or satellite or aviation device, such as low-orbit communication satellites, high-altitude platforms, and UAV. In the embodiment of the present application, the apparatus used to realize the function of the network device may be the network device itself, or it may be an apparatus that can support the network device to realize the function, such as a chip system or a combined device or component that can realize the function of the network device. The apparatus can be installed on network device. The embodiments of the present application do not limit the specific technology and specific device form used by the network device.

The embodiment takes the communication implementation solution between the satellite and the terminal (UE) as an example.

The embodiment considers that: the existing mechanism cannot guarantee that when the RACH is congested, the UE can successfully access the network within a limited time (Validity timer) and reserve more time for data transmission. Therefore, the present application provides a solution that can avoid RACH congestion in the IoT-NTN network, thereby avoiding the problem of service interruption caused by RACH taking up too much time and causing insufficient time for data transmission within the uplink synchronization valid time.

According to the conclusions of the radio access network (RAN)2 116-e meeting, for the Internet of Things (IoT)-Non Terrestrial Network (NTN) Quasi-Earth Fixed satellites scenario, due to the satellite movement, the satellites covering a certain area arrive will stop service when arrive at a specific time point T1 (that is, end-time of serving satellite's coverage), and the service start-time of the next satellite covering the area is T2 (that is, start-time of incoming satellite's coverage). T1 and T2 are broadcast through SI, and are valid for all UE in the area.

As shown in FIG. 4, FIG. 4 is a schematic diagram of a terminal delayed access scenario according to an embodiment of the present application.

As shown in FIG. 4, the current service satellite broadcasts the first time T1 (i.e. end-time of the serving satellite's coverage) and the second time T2 (i.e. start-time of the incoming satellite's coverage) through the system information.

In an embodiment, the first time T1 is the service end time when the network device covers the current service area; the second time T2 is the service start time when the next network device covers the current service area. For example, the network device is a satellite, the first time T1 is the service end time of the satellite covering the current network service area; the second time T2 is the service start time of the next satellite covering the current network service area.

T1 and T2 are broadcast through SI and are effective for all UE in the area. Therefore, at the T2 time point, there may be a large number of UE trying to access the satellite, causing RACH congestion.

In an embodiment, for the UE that attempts to access the network at time T2, delaying accessing in a preset time delay based on the time T2, that is, the UE will try to obtain the required SI and access the network at the time point of T2+delay, which ensures that the time for each UE to access the network is discretized to avoid RACH congestion, thereby avoiding the problem of service interruption caused by RACH taking up too much time and causing insufficient time for data transmission within the uplink synchronization valid time.

In an embodiment, in response to meeting a first preset condition, delaying, by a terminal, access to network for a preset time according to a second time issued by a network device.

Therefore, through the above solution, RACH congestion in the IoT-NTN network can be avoided, thereby avoiding the problem of service interruption caused by RACH taking up too much time and causing insufficient time for data transmission within the uplink synchronization valid time.

In an embodiment, the method further includes:
issuing, by the network device, a radio resource control (RRC) release message to release the terminal before a first time.

In an embodiment, the parameters carried by the RRC release message include at least one of the following: a duration T, and a specific cause value.

In an embodiment, the method further includes at least one of the following:
issuing, by the network device, the first time and/or the second time through a system information;
the first time being a service end time of the network device covering a current service area; and
the second time being a service start time of a next network device covering the current service area.

In an embodiment, the first time T1 and the second time T2 are issued by the network to the terminal (UE) through SI, and the terminal delays access to the network for the preset time according to the second time T2 issued by the network device.

In an embodiment, the terminal meeting the first preset condition, including at least one of the following:
the terminal being released by the network before the first time; and
the terminal accessing the network at the second time.

In an embodiment, the terminal is released by the network before the first time, and the following solution can be used.

The RRC release message is issued by the network to the terminal, and the terminal is released through the RRC release message issued by the network device.

In an embodiment, the parameters carried by the RRC release message issued by the network device may include at least one of the following: a duration T, and a specific cause value. In an embodiment, the specific cause value such as coverage discontinuity indicates that the release is because the current satellite is about to stop service.

In an embodiment, the manner for the terminal to determine the preset time may include at least one of the following.

First manner: determining or generating, by the terminal, the preset time according to a first time range.

In an embodiment, the terminal can randomly select a duration as the preset time according to the duration T issued by the network device in the range of 0 to T.

In an embodiment, T is a value greater than 0. The T value cannot exceed the satellite service time.

In an embodiment, T can be a fixed value.

In an embodiment, T may be associated with the current cell load. For example, the higher the load, the greater T is.

Second manner: determining or generating, by the terminal, the preset time according to a grouping and a preset time granularity.

In an embodiment, the quantity of groups and the preset time granularity can be determined by the network according to the current load and the random access channel RACH capacity, and issued to the UE.

In an embodiment, in response to meeting a second preset condition, determining, by the terminal, that the preset time is invalid or not take effect.

In an embodiment, meeting the second preset condition includes at least one of the following.

In a first case, the RRC release message does not carry the T value.

In a second case, the T value carried by the RRC release message is 0.

In a third case, the release cause value carried by the RRC release message is not a specific cause value.

That is, if the RRC release does not carry a T value or the T value is 0 or the release cause is not a specific cause value such as discontinue coverage, the UE will access the network without delay.

In a fourth case, if the current service is a preset high-priority service, for example, if the current UE is a high-priority service such as an emergency call, the UE will access the network without delay.

In an embodiment, as shown in FIG. 4, the current service satellite broadcasts T1 (i.e. end-time of serving satellite's coverage) and T2 (i.e. start-time of incoming satellite's coverage) through system information.

For a UE that attempts to access the network at time T2, the accessing will be delayed by delay based on T2, that is, the UE will try to obtain the required SI and access the network at the T2+delay time point to ensure that the time of each UE accessing the network is discrete to avoid RACH congestion.

In an embodiment, the UE and the corresponding delay can be determined as follows:

### Option a:

The UE is a UE released by the network through the RRC release message, and the RRC release message carries a specific cause value, such as coverage discontinuity, indicating that the release is because the current satellite is about to stop serving.

The RRC release message carries a duration T, then delay=random (0, T), that is, each UE randomly selects a time delay access within the range of 0~T.

### Option b:

The UE is a UE released by the network through the RRC release message, and the RRC release message carries a specific cause value, such as coverage discontinuity, indicating that the release is because the current satellite is about to stop serving.

UE are divided into N groups (such as grouping according to UE identification, UEID mod N), delay delta, N and delta are issued by the network device, then the delayed access time of each group of UE is (UEID mod N) *delta.

In an embodiment, N and delta can be determined by the network according to the current load and RACH capacity. For example, delta can be the currently configured RACH cycle.

### Option c:

The UE is all UE attempting to access the network at time T2.

The network device sends an RRC release message, and the RRC release message carries a duration T, then delay=random (0, T), that is, each UE randomly selects a time delay access within the range of 0~T.

### Option d:

The UE are all UE that attempt to access the network at time T2.

UE are divided into N groups (such as grouping according to UE identification, UEID mod N), delay delta, N and delta are issued by the network device, then the delayed access time of each group of UE is (UEID mod N) *delta. N and delta can be determined by the network based on the current load and RACH capacity. For example, delta can be the currently configured RACH cycle.

In an embodiment, through the above solution, the terminal delays accessing the network for the preset time according to the second time issued by the network device. Therefore, by delaying the terminal's access to the network for a preset time, the problem of RACH congestion in the IoT-NTN network caused by centralized access of a large number of UE is avoided, thereby avoiding the problem of RACH congestion in the IoT-NTN network and the problem of service interruption caused by RACH taking up too much time and causing insufficient time for data transmission within the uplink synchronization valid time.

In an embodiment, the process of implementing congestion control for communication between the network device and the terminal (UE) can be referred to as shown in FIG. 5. In an embodiment, for the principle of implementing congestion control for communication between the network device and the terminal (UE) and the principles of each scenario, please refer to the above embodiments and will not be described again here.

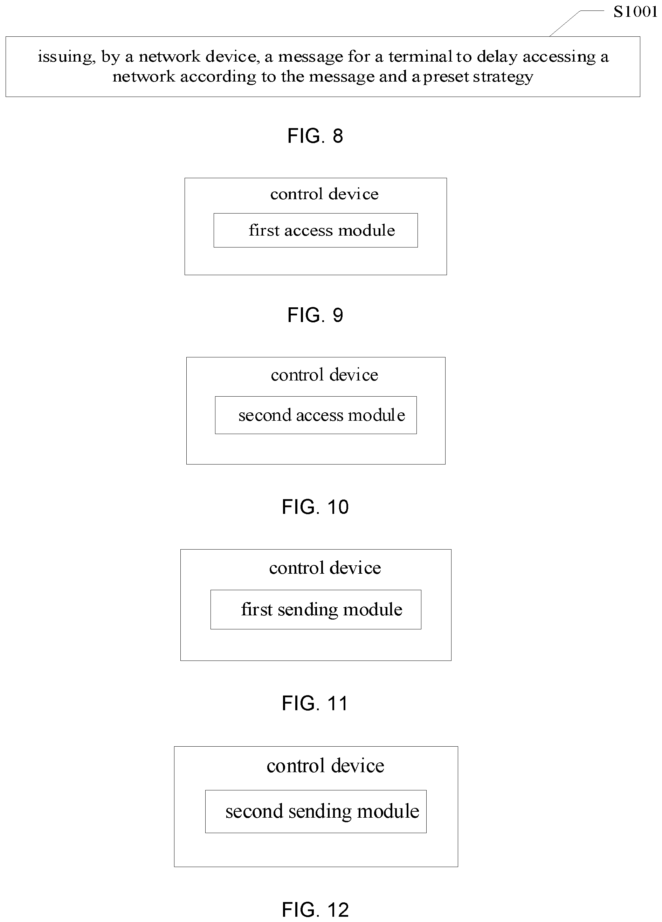

As shown in FIG. 8, the fourth embodiment of the present application provides a control method, which is applicable to network device. The control method includes the following steps:
S1001: issuing, by a network device, a message for a terminal to delay accessing a network according to the message and a preset strategy.

In an embodiment, communication connections are established between the terminal and the network devices in the network communication system where the terminal is located. The network device can be a base station or satellite or aviation device, such as low-orbit communication satellites, high-altitude platforms, and UAV. In the embodiment of the present application, the apparatus used to realize the function of the network device may be the network device itself, or it may be an apparatus that can support the network device to realize the function, such as a chip system or a combined device or component that can realize the function of the network device. The apparatus can be installed on network device. The embodiments of the present application do not limit the specific technology and specific device form used by the network device.

The embodiment takes the communication implementation solution between the satellite and the terminal (UE) as an example.

In an embodiment, the messages sent by the network device include but are not limited to SI, RRC release messages, etc.

The embodiment considers that: for the IoT-NTN network, the existing mechanism cannot guarantee that when the RACH is congested, the UE can successfully access the network within a limited time (Validity timer) and reserve more time for data transmission. Therefore, the present application provides a solution that can avoid RACH congestion in the IoT-NTN network, thereby avoiding the problem of service interruption caused by RACH taking up too much time and causing insufficient time for data transmission within the uplink synchronization valid time.

In an embodiment, as mentioned above, according to the conclusions of the radio access network (RAN)2 116-e meeting, for the Internet of Things (IoT)-Non Terrestrial Network (NTN) Quasi-Earth Fixed satellites scenario, due to the satellite movement, the satellites covering a certain area arrive will stop service when arrive at a specific time point T1 (that is, end-time of serving satellite's coverage), and the service start-time of the next satellite covering the area is T2 (that is, start-time of incoming satellite's coverage). T1 and T2 are broadcast through SI, and are valid for all UE in the area.

As shown in FIG. 4, FIG. 4 is a schematic diagram of a terminal delayed access scenario according to an embodiment of the present application.

As shown in FIG. 4, the current service satellite broadcasts the first time T1 (i.e. end-time of the serving satellite's coverage) and the second time T2 (i.e. start-time of the incoming satellite's coverage) through the system information.

In an embodiment, the first time T1 is the service end time when the network device covers the current service area; the second time T2 is the service start time when the next network device covers the current service area. For example, the network device is a satellite, the first time T1 is the service end time of the satellite covering the current network service area; the second time T2 is the service start time of the next satellite covering the current network service area.

T1 and T2 are broadcast through SI and are effective for all UE in the area. Therefore, at the T2 time point, there may be a large number of UE trying to access the satellite, causing RACH congestion.

In an embodiment, for the UE that attempts to access the network at time T2, delaying accessing in a preset time delay based on the time T2, that is, the UE will try to obtain the required SI and access the network at the time point of T2+delay, which ensures that the time for each UE to access the network is discretized to avoid RACH congestion, thereby avoiding the problem of service interruption caused by RACH taking up too much time and causing insufficient time for data transmission within the uplink synchronization valid time.

In an embodiment, the message is issued by the network device for the terminal to delay accessing the network according to the message and the preset strategy.

Therefore, the terminal delays accessing the network according to the messages issued by the network device and the preset strategy, RACH congestion in the IoT-NTN network can be avoided, thereby avoiding the problem of service interruption caused by RACH taking up too much time and causing insufficient time for data transmission within the uplink synchronization valid time.

In an embodiment, the S1001 step includes:
issuing, by a network device, a second time for a terminal to delay accessing a network in a preset time according to the second time.

In an embodiment, the S1001 step further includes:
issuing, by the network device, an RRC release message to release the terminal before a first time.

In an embodiment, the parameters carried by the RRC release message include at least one of the following: a duration T, and a specific cause value.

In an embodiment, the method includes at least one of the following:
issuing, by the network device, the first time T1 and/or the second time T2 through a system information;
the first time T1 being a service end time of the network device covering a current service area; and
the second time T2 being a service start time of a next network device covering the current service area.

In an embodiment, in response to meeting a preset condition, delaying, by a terminal, access to the network according to a preset strategy.

In an embodiment, meeting the preset condition may include: meeting the first preset condition and/or meeting the second preset condition.

In an embodiment, meeting the first preset condition includes at least one of the following:
the terminal being released by the network before a first time; and
the terminal accessing the network at a second time.

In an embodiment, the terminal is released by the network before the first time, and the following solution can be used.

The RRC release message is issued by the network to the terminal, and the terminal is released through the RRC release message issued by the network device.

In an embodiment, the parameters carried by the RRC release message issued by the network device may include at least one of the following: a duration T, and a specific cause value. In an embodiment, the specific cause value such as coverage discontinuity indicates that the release is because the current satellite is about to stop service.

In an embodiment, the meeting the second preset condition may include at least one of the following.

In a first case, the RRC release message carrying a T value;

In a second case, the T value carried by the RRC release message not being 0;

In a third case, a release cause value carried by the RRC release message being the specific cause value;

That is, if the RRC release does not carry the T value or the T value is 0 or the release cause is not a specific cause value such as discontinue coverage, the second preset condition is not met and the UE will access the network without delay.

In a fourth case, if the current service is not a preset high-priority service. For example, if the current UE is a high-priority service such as an emergency call, the second preset condition is not met, and the UE will access the network without delay.

Thus, in response to meeting the first preset condition and/or meeting the second preset condition, delaying, by the terminal, access to the network according to the preset strategy.

In an embodiment, the delaying, by the terminal, access to the network according to the preset strategy, including:
delaying, by the terminal, access to the network according to the preset time.

In an embodiment, the preset time is determined by the terminal.

In an embodiment, in response to meeting the first preset condition and/or meeting the second preset condition, determining the preset time, and delaying, by the terminal, access to the network according to the second time issued by the network device.

In an embodiment, a manner for the terminal to determine the preset time includes at least one of the following.

First manner: determining or generating, by the terminal, the preset time according to a first time range.

In an embodiment, the terminal can randomly select a duration as the preset time according to the duration T issued by the network device in the range of 0 to T.

In an embodiment, T is a value greater than 0. The T value cannot exceed the satellite service time.

In an embodiment, T can be a fixed value.

In an embodiment, T may be associated with the current cell load. For example, the higher the load, the greater T is.

Second manner: determining or generating, by the terminal, the preset time according to a grouping and a preset time granularity.

In an embodiment, the quantity of groups and the preset time granularity can be determined by the network according to the current load and the random access channel RACH capacity, and issued to the UE.

In an embodiment, as shown in FIG. 4, the current service satellite broadcasts T1 (i.e. end-time of serving satellite's coverage) and T2 (i.e. start-time of incoming satellite's coverage) through system information.

For a UE that attempts to access the network at time T2, the accessing will be delayed by delay based on T2, that is, the UE will try to obtain the required SI and access the network at the T2+delay time point to ensure that the time of each UE accessing the network is discrete to avoid RACH congestion.

In an embodiment, the UE and the corresponding delay can be determined as follows.

### Option a:

The UE is a UE released by the network through the RRC release message, and the RRC release message carries a specific cause value, such as coverage discontinuity, indicating that the release is because the current satellite is about to stop serving.

The RRC release message carries a duration T, then delay=random (0, T), that is, each UE randomly selects a time delay access within the range of 0~T.

### Option b:

The UE is a UE released by the network through the RRC release message, and the RRC release message carries a specific cause value, such as coverage discontinuity, indicating that the release is because the current satellite is about to stop serving.

UE are divided into N groups (such as grouping according to UE identification, UEID mod N), delay delta, N and delta are issued by the network device, then the delayed access time of each group of UE is (UEID mod N) *delta.

In an embodiment, N and delta can be determined by the network according to the current load and RACH capacity. For example, delta can be the currently configured RACH cycle.

### Option c:

The UE is all UE attempting to access the network at time T2.

The network device sends an RRC release message, and the RRC release message carries a duration T, then delay=random (0, T), that is, each UE randomly selects a time delay access within the range of 0~T.

### Option d:

The UE are all UE that attempt to access the network at time T2.

UE are divided into N groups (such as grouping according to UE identification, UEID mod N), delay delta, N and delta are issued by the network device, then the delayed access time of each group of UE is (UEID mod N) *delta. N and delta can be determined by the network based on the current load and RACH capacity. For example, delta can be the currently configured RACH cycle.

In an embodiment, through the above solution, the network device issues a message for the terminal to delay access to the network according to the message and the preset strategy. Therefore, by delaying the terminal's access to the network, the problem of RACH congestion in the IoT-NTN network caused by centralized access of a large number of UE is avoided, thereby avoiding the problem of RACH congestion in the IoT-NTN network and the problem of service interruption caused by RACH taking up too much time and causing insufficient time for data transmission within the uplink synchronization valid time.

In an embodiment, the process of implementing congestion control for communication between the network device and the terminal (UE) can be referred to as shown in FIG. 5. In an embodiment, for the principle of implementing congestion control for communication between the network device and the terminal (UE) and the principles of each scenario, please refer to the above embodiments and will not be described again here.

As shown in FIG. 9, the embodiment of the present application further provides a control device, which is applicable to a terminal device. The control device includes a first access module.

The first access module is configured to delay access to the network for a preset time according to a second time issued by the network device in response to meeting the first preset condition.

In an embodiment, the control device further includes a first determination module.

The first determination module is configured to determine the preset time.

In an embodiment, the first determination module is further configured to determine or generate the preset time according to the first time range; or, determine or generate the preset time according to the grouping.

In an embodiment, the first determination module is further configured to randomly select a duration as the preset time according to the duration T issued by the network device in a range of 0 to T. In an embodiment, T is a value greater than 0, or T is associated with the current load.

In an embodiment, the first access module is further configured to determine not to take effect the preset time in response to meeting the second preset condition.

In an embodiment, the functional implementation of each module in the above-mentioned control device corresponds to each step in the above-mentioned embodiments of the control method, and its functions and implementation processes will not be described again here.

As shown in FIG. 10, the embodiment of the present application further provides a control device, which is applicable to the terminal device. The control device includes a second access module.

The second access module is configured to delay access to the network according to the preset strategy in response to meeting the preset conditions.

In an embodiment, the second access module is further configured to delay access to the network according to the preset time.

In an embodiment, the control device further includes a second determination module.

The second determination module is configured to determine the preset time.

In an embodiment, the second determination module is further configured to determine or generate the preset time according to the first time range; or, determine or generate the preset time according to the grouping.

In an embodiment, the second determination module is further configured to randomly select a duration as the preset time according to the duration T issued by the network device in a range of 0 to T. In an embodiment, T is a value greater than 0, or T is associated with the current load.

In an embodiment, the functional implementation of each module in the above-mentioned control device corresponds to each step in the above-mentioned embodiments of the control method, and its functions and implementation processes will not be described again here.

As shown in FIG. 11, the embodiment of the present application further provides a control device, which is applicable to the network device. The control device includes a first sending module.

The first sending module is configured to issue a second time for the terminal to delay access to the network for the preset time according to the second time.

In an embodiment, the first sending module is further configured to issue an RRC release message to release the terminal before the first time.

In an embodiment, the functional implementation of each module in the above-mentioned control device corresponds to each step in the above-mentioned embodiments of the control method, and its functions and implementation processes will not be described again here.

As shown in FIG. 12, the embodiment of the present application further provides a control device, which is applicable to the network device. The control device includes a second sending module.

The second sending module is configured to issue a message for the terminal to delay access to the network according to the message and the preset strategy.

In an embodiment, the second sending module is further configured to issue a second time for the terminal to delay access to the network for the preset time according to the second time.

In an embodiment, the second sending module is further configured to issue an RRC release message to release the terminal before the first time.

In an embodiment, the functional implementation of each module in the above-mentioned control device corresponds to each step in the above-mentioned embodiments of the control method, and its functions and implementation processes will not be described again here.

An embodiment of the present application further provides a communication device. The communication device includes a memory and a processor. A communication program is stored on the memory. When the communication program is executed by the processor, the steps of the control method according to any of the above embodiments are implemented. The communication device can be a terminal device in the above control method. When used as the terminal device, the communication device can specifically be: a mobile phone, a tablet computer, a notepad computer, a hand-held computer, a PDA, a PMP, a navigation apparatus, a wearable device, a smart bracelet, a pedometer and other terminal devices. In an embodiment, the communication device may also be a network device in the above communication method. When used as the network device, the communication device may be a base station or satellite or aviation device, such as low-orbit communication satellites, high-altitude platforms, and UAV. In the embodiment of the present application, the apparatus used to realize the function of the network device may be the network device itself, or it may be an apparatus that can support the network device to realize the function, such as a chip system or a combined device or component that can realize the function of the network device. The apparatus can be installed on network device. The embodiments of the present application do not limit the specific technology and specific device form used by the network device..

Embodiments of the present application further provide a computer-readable storage medium. A control program is stored on the storage medium. When the control program is executed by a processor, the steps of the control method described in any of the above embodiments are implemented.

The embodiments of communication device and computer-readable storage medium provided by the present application include all technical features of each embodiment of the above method. The expansion and explanation content of the description is basically the same as that of each embodiment of the above method, and details are not repeated here.

The embodiments of the present application further provide a computer program product including computer program code. When the computer program code is run on a computer, the computer is made to execute the methods described in the various possible implementation manners above.

The embodiments of the present application further provide a chip including a memory and a processor. The memory is configured to store a computer program, and the processor is configured to call and run the computer program from the memory, so that the device installed with the chip executes the methods described in the various possible implementation manners above.

It is understood that the above-mentioned scenarios are only examples and do not constitute a limitation on the application scenarios of the technical solutions provided by the embodiments of the present application. The technical solutions of the present application can also be applied to other scenarios. For example, those of ordinary skill in the art know that with the evolution of system architecture and the emergence of new service scenarios, the technical solutions provided in the embodiments of the present application are also applicable to similar technical problems.

The above serial numbers of the embodiments of the present application are only for description and do not represent the advantages or disadvantages of the embodiments.

The steps in the methods according to the embodiments of the present application can be sequence adjusted, combined, and deleted according to actual needs.

The unit in the device according to the embodiments of the present application can be merged, divided, and deleted according to actual needs.

In the present application, the same or similar terms, concepts, technical solutions and/or application scenario descriptions are generally only described in detail the first time they appear. When they appear again, for the sake of simplicity, they are generally not described again. When understanding the technical solutions and other content of the present application, for the same or similar term concepts, technical solutions and/or application scenario descriptions that are not described in detail later, refer to the relevant previous detailed descriptions.

In the present application, the descriptions of each embodiment have their own emphases, and for parts that are not detailed or recorded in a certain embodiment, refer to the relevant descriptions of other embodiments.

The technical features of the present application can be combined in any way. To simplify the description, not all possible combinations of the technical features in the above embodiments are described. However, as long as there is no contradiction in the combination of these technical features, they should be considered to be within the scope of the present application.

Through the description of the above embodiments, those skilled in the art can clearly understand that the methods of the above embodiments can be implemented by means of software plus a necessary general-purpose hardware platform, and of course also by hardware, but in many cases the former is better implementation. Based on this understanding, the essence of the technical solution of the present application or the part that contributes to the prior art can be embodied in the form of software products, the computer software product is stored in one of the above storage medium (such as ROM/RAM, magnetic disk, optical disk), including several instructions to make a terminal device (which may be a mobile phone, a computer, a server, a controlled terminal, or a network device, etc.) execute the method of each embodiment of the present application.

In the above embodiments, it may be implemented in whole or in part by software, hardware, firmware, or any combination thereof. When implemented using software, it may be implemented in whole or in part in the form of a computer program product. A computer program product includes one or more computer instructions. When computer program instructions are loaded and executed on a computer, processes or functions according to embodiments of the present application are generated in whole or in part. The computer may be a general purpose computer, a special purpose computer, a computer network, or other programmable device. Computer instructions may be stored in or transmitted from one computer-readable storage medium to another computer-readable storage medium, e.g., computer instructions may be transmitted from a website, computer, server or data center via a wired link (e.g. coaxial cable, optical fiber, digital subscriber line) or wireless (such as infrared, wireless, microwave, etc.) means to transmit to another website site, computer, server or data center. Computer-readable storage medium can be any available medium that can be accessed by a computer or a data storage device such as a server, data center, or other integrated medium that contains one or more available medium.

Available medium may be magnetic medium (e.g., floppy disk, storage disk, magnetic tape), optical medium (e.g., DVD), or semiconductor medium (e.g., Solid State Disk (SSD)), etc.

The above are only some embodiments of the present application, and are not therefore limiting the scope of the present application. Any equivalent structure or equivalent process transformation made by using the contents of the specification and drawings of the present application, or directly or indirectly used in other related technical fields, is also included in the scope of the present application.

## Claims

1. A control method, **characterized by** comprising following steps:
S10: in response to meeting a first preset condition, delaying, by a terminal, access to network for a preset time according to a second time issued by a network device.

2. The control method according to claim 1, wherein the meeting the first preset condition comprises at least one of the following:
being released by the network before a first time, wherein the first time is issued by the network device; and
accessing the network at the second time.

3. The control method according to claim 2, wherein the method comprises at least one of the following:
the first time being a service end time of the network device covering a current service area;
the second time being a service start time of a next network device covering the current service area; and
the terminal being released through a radio resource control (RRC) release message of the network.

4. The control method according to claim 3, wherein parameters carried by the RRC release message comprise at least one of the following: a duration T, and a specific cause value.

5. The control method according to claim 1, wherein the step S10 comprises:
determining the preset time.

6. The control method according to claim 5, wherein a manner for determining the preset time comprises at least one of the following:
determining or generating the preset time according to a first time range; and
determining or generating the preset time according to a grouping.

7. The control method according to claim 6, wherein the determining or generating the preset time according to the first time range comprises:
randomly selecting a duration as the preset time according to the duration T issued by the network device in a range of 0 to T, wherein T is a value greater than 0, or T is associated with a current load.

8. The control method according to claim 5, wherein the step S10 further comprises:
in response to meeting a second preset condition, determining that the preset time is not asserted.

9. The control method according to claim 8, wherein the meeting the second preset condition comprises at least one of the following:
the RRC release message not carrying a T value;
the T value carried by the RRC release message being 0;
a release cause value carried by the RRC release message not being the specific cause value; and
a current business being a preset high-priority business.

10. A control method, **characterized by** comprising following steps:
S100: in response to meeting a preset condition, delaying, by a terminal, access to the network according to a preset strategy.

11. The control method according to claim 10, wherein the meeting the preset condition comprises: meeting a first preset condition and/or meeting a second preset condition.

12. The control method according to claim 11, wherein the meeting the first preset condition comprises at least one of the following:
the terminal being released by the network before a first time, wherein the first time is issued by a network device; and
the terminal accessing the network at a second time, wherein the second time is issued by the network device.

13. The control method according to claim 12, wherein the method comprises at least one of the following:
the first time being a service end time of the network device covering a current service area;
the second time being a service start time of a next network device covering the current service area; and
the terminal being released through a radio resource control (RRC) release message of the network.

14. The control method according to claim 13, wherein parameters carried by the RRC release message comprise at least one of the following: a duration T, and a specific cause value.

15. The method of claim 11, wherein the meeting the second preset condition comprises at least one of the following:
the RRC release message carrying a T value;
the T value carried by the RRC release message not being 0;
a release cause value carried by the RRC release message being the specific cause value; and
a current business not being a preset high-priority business.

16. The control method according to claim 10, wherein the delaying, by the terminal, access to the network according to the preset strategy comprises:
delaying access to the network according to the preset time.

17. The control method according to claim 16, further comprising:
determining the preset time.

18. The control method according to claim 17, wherein a manner for determining the preset time comprises at least one of the following:
determining or generating the preset time according to a first time range; and
determining or generating the preset time according to a grouping.

19. The control method according to claim 18, wherein the determining or generating the preset time according to the first time range comprises:
randomly selecting a duration as the preset time according to the duration T issued by the network device in a range of 0 to T, wherein T is a value greater than 0, or T is associated with a current load.

20. A control method, **characterized by** comprising following steps:
S101: issuing, by a network device, a second time for a terminal to delay accessing a network in a preset time according to the second time.

21. The control method according to claim 20, further comprising:
issuing, by the network device, a radio resource control (RRC) release message to release the terminal before a first time.

22. The control method according to claim 21, wherein parameters carried by the RRC release message comprise at least one of the following: a duration T, and a specific cause value.

23. The control method according to claim 21, wherein the method comprises at least one of the following:
issuing, by the network device, the first time and/or the second time through a system information;
the first time being a service end time of the network device covering a current service area; and
the second time being a service start time of a next network device covering the current service area.

24. The control method according to claim 21, wherein a manner for the terminal to determine the preset time comprises at least one of the following:
determining or generating, by the terminal, the preset time according to a first time range; and
determining or generating, by the terminal, the preset time according to a grouping.

25. The control method according to claim 24, wherein the determining or generating, by the terminal, the preset time according to the first time range comprises:
randomly selecting, by the terminal, a duration as the preset time according to the duration T issued by the network device in a range of 0 to T, wherein T is a value greater than 0, or T is associated with a current load.

26. A control method, **characterized by** comprising following steps:
S1001: issuing, by a network device, a message for a terminal to delay accessing a network according to the message and a preset strategy.

27. The control method according to claim 26, wherein the step S1001 comprises:
issuing, by a network device, a second time for a terminal to delay accessing a network in a preset time according to the second time.

28. The control method according to claim 27, wherein the step S1001 further comprises:
issuing, by the network device, a radio resource control (RRC) release message to release the terminal before a first time.

29. The control method according to claim 28, wherein parameters carried by the RRC release message comprise at least one of the following: a duration T, and a specific cause value.

30. The control method according to claim 28, wherein the method comprises at least one of the following:
issuing, by the network device, the first time and/or the second time through a system information;
the first time being a service end time of the network device covering a current service area; and
the second time being a service start time of a next network device covering the current service area.

31. The control method according to claim 27, wherein a manner for the terminal to determine the preset time comprises at least one of the following:
determining or generating, by the terminal, the preset time according to a first time range; and
determining or generating, by the terminal, the preset time according to a grouping.

32. The control method according to claim 31, wherein the determining or generating, by the terminal, the preset time according to the first time range comprises:
randomly selecting, by the terminal, a duration as the preset time according to the duration T issued by the network device in a range of 0 to T, wherein T is a value greater than 0, or T is associated with a current load.

33. A communication device, **characterized by** comprising:
a memory; and
a processor, wherein a control program is stored on the memory, and when the control program is executed by the processor, steps of the control method according to claim 1 are implemented.

34. A readable storage medium, **characterized in that**, a computer program is stored on the readable storage medium, and when the computer program is executed by a processor, steps of the control method according to claim 1 are implemented.
